# EUROPEAN PATENT SPECIFICATION

(11) **EP 2 530 618 B1**
(45) Date of publication and mention of the grant of the patent: **08.06.2016**
(21) Application number: 12170543.8
(22) Date of filing: 01.06.2012
(51) Int. Cl.: G06F 21/41, G06F 21/33, H04L 29/06

(54) **Sign-On system with distributed access**
Sign-On-System mit verteiltem Zugang
Système d'ouverture de session avec accès distribué

(30) Priority: 01.06.2011 EP 11168373
(43) Date of publication of application: 05.12.2012
(73) Proprietor: DSwiss AG, 8003 Zürich (CH)
(72) Inventor: Christen, Tobias, 8810 Horgen (CH); Rennhard, Marc, 8308 Illnau (CH); Tschannen, Michael, 8500 Frauenfeld (CH)
(74) Representative: Liebetanz, Michael

(56) References cited:
- EP-A2- 1 363 424
- US-A1- 2009 271 630
- US-B2- 7 246 230
- MENEZES A ET AL: "Ch.12 Key Establishment Protocols", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS SERIES ON DISCRETE MATHEMATICS AND ITS APPLICATIONS, BOCA RATON, FL, US, PAGE(S) 524 - 527, XP002566644, ISBN: 978-0-8493-8523-0 * page 524 - page 527 *

## Description

### TECHNICAL FIELD

The present invention relates to a sign-on system with distributed access.

### PRIOR ART

Single-sign-on systems (SSO) are known from prior art, enabling a client to register himself only once so that he is able to use his identity later on with a plurality of service providers. Within such a registration an authenticator provides a trustful instance, wherein the user has a trustful relationship with at least one service provider as well as one service provider with another service provider. Such a credential comprises usually at least one feature enabling the service provider to verify the certificate provided by the client. Additionally usually such a credential also comprises an identity token which allows associating the credential to a specific client. Usually the security feature and the identity token cannot be changed without changing the feature itself.

Usually a session between a client and a server is protected relating to the data exchange. One of such protocols is SSL. Usually a public key procedure is used at the beginning of the session to open a trusted transmission channel for the exchange of a symmetric session key enabling a faster symmetric non public encryption procedure.

The authentication can be achieved via a portal, allowing access to all subsequent services behind and in connection with said portal. Furthermore it is possible to use a ticketing system, which means that the user signs-on with one service provider, having a trustful relationship with a group or ring of further provides, often called that the provide a circle of trust. Finally it is possible that the user has a local device within which he stores all login credentials so that a local program uses a sign-on procedure with any of the user's service providers.

As passwords are the least secure authentication mechanism, single-sign-on has now often been applied with more than one type of authentication mechanism according to enterprise risk models, which is then called Reduced-Sign-On (RSO). Therein another set of verification is prompted when access to critical applications is requested. This extra layer of authentication could be a challenge question, a hardware token or smatr card, a digital certificate or biometrics.

A single-sign-on system provided to be used with a site maintained by a financial institution is known from WO 2007/103594, wherein the usability of the system is enhanced through mapping of the userid and the password.

A different single-sign-on system is known from US 7,246,230 where an initial request is to be sent to the secure server hosting the data before receiving an access ticket from the authentication server.

However, prior art single-sign-on procedures are always provided as a feature for the client/user to be able to use a plurality of web sites; but there is no secure interaction with data hosted between one or more service providers.

### SUMMARY OF THE INVENTION

The existing sign-on procedures, being single-sign-on or reduced-sign-on do not provide privacy for the user facing the initial sign-on site.

Safe data storage is a concern for many people. In the world of paper, these people become customer of a bank and put such paper documents in a safe-deposit box. This client relationship with a bank is based on trust and personal supervision of the safe-deposit box system by said banking institution providing access to the box. It is noted that the bank itself has no possibility to legally access the content of the box.

A bank client, living in the digital world of today, has often the additional need to securely store data, e.g. scan's of documents. One traditional solution would be to put a memory stick, tape or hard-disk with such data in a conventional safe-deposit box.

There is, however, a need for an direct electronical storage of such data and access to such data. This problem is in principle addressed by so-called cloud solutions for data storage in the prior art. A cloud storage system allows to get to that data from any location that has web access. It is inconvenient that the user does not know, where, physically, the data is stored.

An additional problem for the user is related to the fact that the user does not have the same trustworthy relationship with a cloud solution provider as he has with e.g. his bank providing the safe deposit box. The cloud storage solution could be compared to a self-storage system instead of user a safe deposit box.

Therefore the user would prefer to be able to have an equivalent solution within his bank as a safe deposit box for virtual items. However, file storage is not a usual core competence of a banking institute.

Based on this prior art it is a technical object of the present invention to provide a safe data storage facility wherein the data is stored within the responsability of a banking institute, although file storage is not a usual core competence of a banking institute.

This problem is solved through a data storage solution provided by a storage facility and associated with the client but provided by a service provider, e.g. a bank, wherein the client should have the possibility to make a sign-on procedure with the service provider enabling him to access his data directly. This approach according to the invention "feels" for the user concerned as a SSO procedure, although it has security advantages over a SSO procedure which makes it more appropriate to simply state it as a Sign-On procedure.

It is a further object of the invention to restrict the access to the data of the client in a secure way and especially it should be avoided that these data can be accessed by the service provider alone as well as by the data storage facility alone. Any access to the data of the client requires both actions of the service provider, the data storage provider and (optional) the user.

A further object of the invention is to minimize or to avoid any man-in-the-middle exposure of the client.

Additionally it is an object of the invention to avoid so called replay attacks.

Said objects and further objects as will be seen from the following description are reached with a method and device according to the invention.

A security system for storing sensitive data and providing access to this data to at least one user having an electronic communication device and using a single-sign-on procedure comprises a first computer system maintained by a first service provider adapted to run at least one application and being accessible by the at least one user following input of an user identification code within a request and a second computer system maintained by a second service provider adapted to run at least one application and being accessible by the at least one user following input of an user identification code within a request. The application of the first computer system is adapted to send a challenge request comprising the user identification code to the second computer system; wherein the application of the second computer system is adapted to send an authentication message comprising - besides the response to the challenge - the user identification code and a user sign-on key, i.e. SignOnKey_1, to the first computer system, wherein the user sign-on key is asymmetrically encrypted (for example using RSA) with a first service provider's public key, wherein upon the reception of the authentication message, the application of the first computer system is adapted to create an access ticket comprising the first decrypted (using with first service provider's private key, e.g. an RSA-key) and then digitally signed (using first service provider's private key, e.g. an RSA-key) user sign-on key of the user, asymmetrically encrypted with a second service provider's public key (e.g. an RSA-key), wherein the content of said access ticket is transmitted to the user address from which the initial request comprising the user identification code was initiated for a redirect to an application of the second computer system, wherein the application within the second service provider is adapted to start a communication session with said user for accessing data in the data storage facility after having checked the authentication of the user based on the basis of the user sign-on key, i.e. SignOnKey_1 and a further part of the sign-on key, i.e. SignOnKey_2.

Due to the combination of different key parts of the key of the user together with key parts of the service provider it is possible to provide the necessary security for the user. The layout of the system enables a financial institution to store sensitive client data for the client on a secure external server which can then be accessed by the user using a sign-on procedure, avoiding at the same time data leakages since these client data can then no longer be accessed by the financial institution alone. In fact, the use of key parts withdraws the possibility for the financial institution as well as for the data storage provider to access the data without consent of the user.

Additionally, according to a preferred embodiment, the user has to authenticate himself with a mobile TAN, if he wants to access the data directly with the data storage provider without using the access over the financial institution.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic diagram of an embodiment of the method according to the invention;
- Fig. 2: shows a block diagram of the use of a protocol according to an embodiment of the invention in a greater detail than Fig. 1;

### DESCRIPTION OF PREFERRED EMBODIMENTS

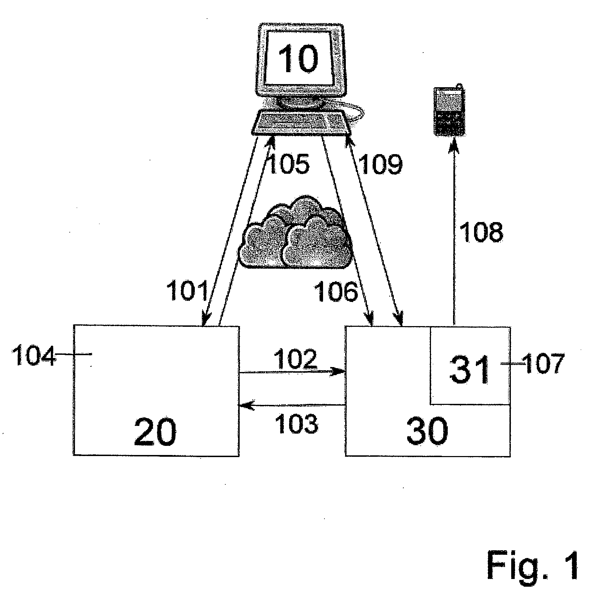

Fig. 1 shows a schematic diagram of an embodiment of a method according to the invention. It shows the different steps executed by the user and the systems involved allowing the user to access his data safe.

The representation of the computing device 10 represents the user and his electronic device for accessing his data. The reference numeral 20 relates to the service provider for which the single-sign-on procedure should be usable. Within the present application said service provider 20 will be named Sign-On service provider to differentiate him over the data storage provider 30 on which servers the data of the client user are stored. The data storage provider 30 comprises a data storage facility or data safe 31 as a memory storage space for a number of its users. Here reference numeral 31 is used to designate the storage space allocated to the user in question.

The reference numeral 10 is used for the user as an acting person as well as to designate the electronic device he is using to access the system. The reference numeral 20 is used for the Sign-On service provider as an acting person as well as for the electronic system comprising the necessary computer equipment to provide an Sign-On access. The reference numeral 30 is used for the data storage provider as an acting person as well as for the electronic system comprising the necessary computer equipment to provide the data safe 31.

Usually, the different computer systems, i.e. the user computer 10, the Sign-On service provider 20 and the data storage provider 30 do not directly communicate with each other but through interconnecting telecommunication systems. This may comprise the internet or X-25 systems, POTS or PSTN, etc.; these systems are represented by a cloud and are named hereafter the net 40.

All computer systems 10, 20 and 30 comprise the necessary interfaces to connect the net 40 as well as the usual human-machine interfaces as a keyboard and a display, where necessary.

The computer 10 can be a desktop computer, a laptop or notebook, smart phone or any electronic device having an interface for communicating and exchanging data with other computers, especially over the net 40.

The general function of a method according to an embodiment of the invention is as follows. Client 10 starts his computer and sends a request 101 to the service provider asking for a sign on opening the data safe 31. This Sign-On request 101 comprises in fact the request to access the system of the Sign-On service provider 20 as well as the request to open the user's personal data safe 31 within the infrastructure of the data storage provider 30.

The Sign-On service provider 20 sends a challenge request 102 comprising the user id of the user and a challenge to the data storage provider 30, i.e. the message (UID, challenge).

As an answer 103 the data storage provider 30 sends the message (enc_{KB}(SignOnKey_1), timestamp, lifetime, challenge, UID, signature_{KD}(timestamp, lifetime, challenge, UID)). The portion signature_{KD}(timestamp, lifetime, challenge, UID) within the answer corresponds to the response to the service provider's challenge.

The different portions of the message are defined as follows:
KD = asymmetric key pair (e.g. RSA-Key pair) of data safe 31. The public key of this key pair must be delivered beforehand (typically after the service provider and data storage provider have entered a trust relationship and have agreed to use the protocol described here) to the service provider in a trustworthy way so the storage provider can unambiguously associate the public key with the data storage provider.

KB = asymmetric key pair (e.g RSA-Key pair) of the service provider 20, e.g. the bank. The public key of this key pair must be delivered beforehand (typically after the service provider and data storage provider have entered a trust relationship and have agreed to use the protocol described here) to the data storage provider in a trustworthy way so the data storage provider can unambiguously associate the public key with the service provider.

enc_{KB}(SignOnKey_1) means SignOnKey_1, asymmetrically encrypted using the public key of an asymmetric key pair KB (e.g. an RSA-key pair).

SignOnKey = symmetric, e.g. AES-256, client (user) specific data storage provider-internal key, where SignOnKey = SignOnKey_1 XOR SignOnKey_2.

SignOnKey_1 is stored in the data base of the storage provider as encKB(SignOnKey_1), i.e. asymmetrically encrypted using service provider's public key (e.g. RSA). This implies that the data storage provider can no longer access SignOnKey_1 without the help of the service provider, as only the service provider can decrypt it using its private key of KB.

SignOnKey_2 is stored in the data base of the storage provider as encAppKey(SignOnKey_2), i.e. encrypted using a symmetric key belonging to the storage provider (e.g. AES).

To summarize, SignOnKey_1, SignOnKey_2, SignOnKey have the following properties: SignOnKey_1 = symmetric client (user) specific internal key, which can only be decrypted by the service provider.

SignOnKey_2 = symmetric service provider 20 specific internal key, which can only be decrypted by the data storage provider.

SignOnKey = symmetric key (e.g. AES) which can on demand be built using SignOnKey_1 and SignOnKey_2, however that requires action of both service provider and data storage provider because both must decrypt their respective SignOnKeys (1 and 2) to create SignOnKey.

Generating these keys works as follows: SignOnKey_2 is randomly generated once and beforehand (typically after the service provider and data storage provider have entered a trust relationship and have agreed to use the protocol described here) by the data storage provider. SignOnKey_1 is randomly created by the data storage provider for each client. The randomness and statistical independence of all keys and combining SignOnKey_1 and SignOnKey_2 using the XOR function guarantees that both keys are necessarily required to produce SignOnKey and knowledge of only SignOnKey_1 or SignOnKey_2 does not provide any information about SignOnKey.

signature_{KX}(element) = a signature on the element, constructed using the private key of KX (e.g. an RSA-key pair), wherein KX is either KB or KD.
timestamp = the time of the computer creating the message
lifetime = the intended lifetime of the message
challenge = the challenge created by the sender
UID = the data storage provider-internal user id

Based upon the reception of the message 103, the Sign-On service provider 20 creates an internal ticket 104 as message (enc_{KD}(signature_{KB}(SignOnKey_1, timestamp, lifetime, challenge, UID, signature_{KD}(timestamp, lifetime, challenge, UID)))).

Wherein enc_{KD}(X) is the encryption of X with the public key of KD and signature_{KB}(Y) is a signature on Y built with the private key of KB.

Said ticket is transmitted as a redirect 105 comprising the ticket back to the user computer 10.

The user 10 transmits said ticket as a request 106 to the data storage provider 30. The data storage provider 30 starts a session with the user 10 and may within such a session asking 108 an mTAN, a mobile TAN, from the user for further security. Such mTAN request is optional.

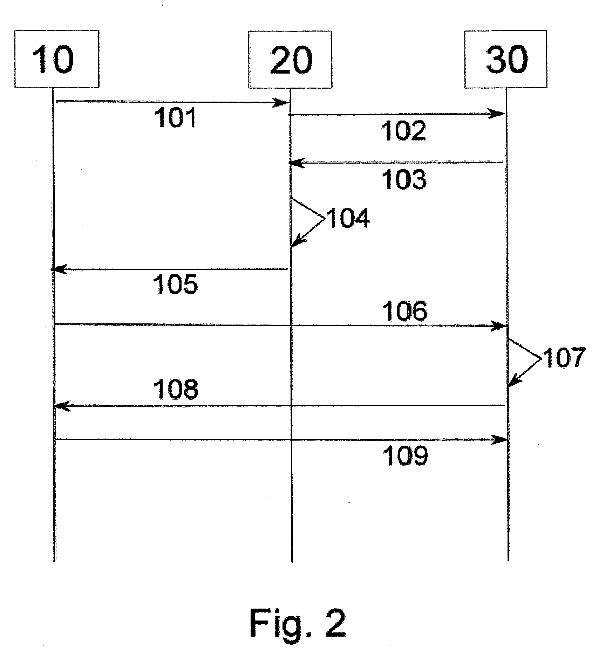

Said general approach according to the embodiment shown in Fig. 1 is now explained in connection with Fig. 2 showing a block diagram of the use of a protocol according to an embodiment of the invention in a greater detail than Fig. 1.

The user 10 sends as a first message "Open data safe" to the Sign-On service provider 20. This is a simple GET request 101 to the service provider 20.

The service provider creates a further message 102 to be transmitted to the data storage provider 30 as follows: "UID, challenge". The UID relates to the data storage provider 30 username and is used to load the combination of SignOnKey_1 and SignOnKey_2 of the client from the database within the data storage provider 30. The challenge is a random number chosen by Sign-On service provider 20 and allows an additional challenge-response authentication of the data storage provider 30 in view of the Sign-On service provider 20. The response is realized by producing a signature over data that includes the challenge and including this response within the following message 103. As we assume that only the data storage provider has access to the private key of KD, only the storage provider can produce the correct response, which guarantees authenticity. Additionally, this challenge-response approach enables the option that the Sign-On service provider 20 can avoid checking the value of the timestamp and the value of the lifetime within message 104, and it enables the Sign-On service provider 20 to use the timestamp and the lifetime to verify directly the topicality of older tickets; since the check of timestamp and lifetime in this context would require a specific time synchronization. With the challenge, all the service provider has to do is remember the challenge for a short timeframe (e.g. 5 minutes) after creation and accept responses only while a challenge is still remembered.

As mentioned in the introduction, usually the man skilled in the art would protect the request at least within a client authenticated SSL-session. It is an optional scenario to activate within the request itself encryption and signature, which would add an additional security to the whole data exchange..

The message itself can have no relevant content relating to the authentication of the Sign-On service provider 20 or the user 10, since preferably the authentication of the Sign-On service provider 20 was already done during the setup of the SSL communication between Sign-On service provider 20 and the user 10. Following transmittal of message 101 an authentication of Sign-On service provider 20 can be achieved through a general encryption of the communication with user 10, e.g. through setting up a SSL-, IPSec-, SSLVPN-connection or another known client authenticated session.

It is noted that the data storage provider 30 accepts within this procedure, that service provider 20 is able to issue at any time valid messages or tickets for all its users, having an account with the data storage provider 30. A trust relationship between the Sign-On service provider 20 and the data storage provider 20 is an implicit requirement for that. This is also the standard assumption for any Sign-On ticket login as known to the man skilled in the art.

Upon reception of message 102 the data storage provider 30 extracts userid UID and the value of the challenge for creating an answer 103:
(enc_{KB}(SignOnKey_1), timestamp, lifetime, challenge, UID, signature_{KD}(Timestamp, lifetime, challenge, UID)).

Wherein enc_{KB}(X) is the encryption of X with the public key of KB and signature_{KD}(Y) is a signature on Y built with the private key of KD. This signature serves as the response to the challenge.

Said complex message 103 comprises an encrypted part enc_{KB}, wherein the encryption is based on the public part of an arbitrary key pair (e.g. RSA) belonging to the service provider 20, e.g. the bank. In fact, the Sign-On key_1 is encrypted with a public key of B. The timestamp is simply the unit timestamps of the system. The lifetime is a predetermined length of time of the validity of the ticket. The challenge is simply the challenge from message 102, the UID is the data storage provider's 30 UID as mentioned before. The signature_{KD} part of the message comprises the signature over the four mentioned parts i.e. the timestamp, the lifetime, the challenge and the UID as mentioned before and corresponds to the response to the challenge. This token avoids, that one single ticket can be used more than once, does not allow for replay attacks and avoids additionally that tickets can be requested beforehand, since the timestamp lifetime combination is encapsulated in a signed way. Furthermore said signature is used in message 107 as authentication token for the client.

The main point, which will be explained later, is that the Sign-On-Key comprises in fact two parts which are both stored in the database and are combined during log in, i.e. SignOnKey = SignOnKey_1 XOR SignOnKey_2. Here in message 103 only SignOnKey_1 is used. Only B as the "Bank" can activate SignOnKey_1 and only the data storage provider can activate SignOnKey_2.

The next message 104 is referenced as an internal step within the computer system of the Sign-On service provider 20. The Sign-On service provider 20 verifies the response, i.e. the signature of message 103 transmitted from the data storage provider 30 and optionally verifies the timestamp and the lifetime. As mentioned above that check is not absolutely necessary since the challenge can be used for this verification. Bank does this by comparing challenge in the request and challenge locally stored after request 102. The Sign-On service provider 20 furthermore verifies the challenge, since it was originally created by him and the Sign-On service provider 20 decrypts the SignOnKey_1 with the private key KB.

Based on this analysis the Sign-On service provider is capable to create message 104 as a ticket comprising:
(en_{CKD}(signature_{KB}(SignOnKey_{_}1, timestamp, lifetime, challenge, UID; signature_{KD}(timestamp, lifetime, challenge, UID)))).

Wherein enc_{KD}(X) is the encryption of X with the public key of KD and signature_{KD}(Y) is a signature on Y built with the private key of KD.

SignOnKey_1 is then used, together with SignOnKey_2 to activate the key-tree of the client. As usual the UID is the data storage provider's 20 user name. Timestamp and lifetime are the timestamp and lifetime from message 103; the challenge is the challenge from message 102. The signature with KD is the same the signature as copied from message 103. Additionally said message is encrypted and signed since it will be transmitted over an "open" (the links between SignOn service provider 20 and user 10 as well as between user 10 and data storage provider 30 is considered to be secured by SSL without client-authentication, which can nowadays easily be attacked by a man-in-the-middle) channel in the internet 40 as ticket transmittal 105 and message 106. This encryption/signature adds additional security to this delicate piece and makes transmission-security theoretically independent of any transport-layer encryption such as SSL. The use of the SignOnKey_2 will be explained below in connection with the decryption of the transmitted message 104 content.

The ticket transmittal 105 from the Sign-On service provider 20 to the user 10 includes a Redirect to the data storage provider, whereas the ticket is directly included in this redirect.

In the case of a browser communication this could be a HTTP 302 with the GET parameter comprising the above-mentioned ticket. Message 106 then comprises the request directed to the data storage provider 30 and the content relates to messages 104 and 105.

The following verification step 107 is handled within the data storage provider 30. At this stage of the procedure the aim of this step is the activation of the key architecture with the Sign-On key for the user 10.

Initially, the data storage provider 30 verifies the validity of the ticket from message 106, i.e. the content of the message generated in the Sign-On service provider 20 as well as the parts generated in the data storage provider 30 which are also included in the ticket. This relates to the signature and a check of the timestamp: The message is rejected if the current time is smaller than the time of the timestamp or if the current time is larger than the timestamp plus the lifetime interval.

The data storage provider 30 is preferably enabled to block tickets until reaching the timestamp to avoid replay attacks.

Then the data storage provider 30 extracts SignOnKey_1 from the ticket, decrypts SignOnKey_2 with the AppKey and generates the combined SignOnKey through SignOnKey = SignOnKey_1 XOR SignOnKey_2.

Based on this key the data storage provider 30 then opens the key architecture based on the SignOnKey.

### AppKey = Symmetric, e.g. AES-256, application internal key

The AppKey and the private key KB are necessary to activate or unlock the SignOnKey. The SignOnKey is able to activate the key architecture of the client. Said key architecture can additionally comprise several stages. The AppKey is a symmetric (e.g. AES) data storage provider-internal key which only exists once for all users. This key is used by the data storage provider to unlock its part of SignOnKey, i.e. SignOnKey_2. Summing up, there are two keys needed to unlock the SignOnKey, which is needed to activate or unlock a specific user's key architecture: KB, which can be used to unlock SignOnKey_1 as well as AppKey, which can be used to unlock SignOnKey_2. Because SignOnKey_2 is only used internally (unlocked within the reach of data storage provider), it does not need to be transmitted at any time.

The answer message 108 to client user 10 is therefore a simple "ok" or as mentioned above an additional request for a mobile TAN.

The following communication between the user 10 and the data storage provider 30 is then either a message 109 requesting transfer of data from data safe 31 or initially the transmittal of the requested mTAN, which can be acknowledged on another channel, e.g. a mobile communication as an SMS.

The sequence of messages reflects the security policy which is preferred. Sign-On is enabled for client 10 access for the data service provider 30 via a client provider 20. Said access to his data on the data safe 31 is not allowed with the token alone, but he has to provide a mobile TAN code to avoid that Bank can gain access to the user's data safe by simply impersonating himself, i.e. by requesting a said ticket without active interaction of the user.

The present architecture leads to the situation that the combination of the Sign-On key can only be done if the Sign-On service provider 20 and the data storage provider 30 are working together. The data safe 31 cannot be accessed for the data of the client 10 without help of the Sign-On service provider, since SignOnKey_1 is missing. The SignOn service provider 20, e.g. the bank, cannot access the data of the client without help of the data storage provider 30, since SignOnKey_2 is missing.

In case that an attacker would have access to the physical database of data storage provider 30, e.g. through personal physical access of the disks or tapes, he cannot use the data of the client 10 even if he knows KB. He does not have access to SignOnKey_2.

Both keys, AppKey as well as KB can be exchanged without problems in case of a key leakage or if the length of the key becomes to short.

Preferably, a mobile TAN is used for the login procedure in order to avoid an attack through the data service provider's 30 interface for accessing private documents.

As can be seen from the above elements the certificate issued by the service provider has a critical role and the relating RSA-key pair has to be protected in a sufficient manner.

The above mentioned message structure enables additional optional embodiments:
The Sign-On service provider 20 can use the client IP in creating the content message 104 and include it in the encrypted and signed message to increase the security of the ticket transfer and the initialization of the session. This can be done through a comparison of the IP address in the redirect request of the data storage provider 30.

As mentioned above the, in message 102 and the following messages can be omitted and at that place the Sign-On service provider 20 can verify the timestamp and lifetime in the content of message 104. This would nevertheless require that the Sign-On service provider 20 is caching the timestamp or that the clocks of the Sign-On service provider 20 and the data storage provider 30 have some kind of synchronization. Such an approach is usually more difficult to achieve then using the proposed challenge-response approach.

It is an advantage of this kind of SignOnKey use that although SignOnKey_1 is transferred via an internet connection 40 the man in the middle protection is achieved through asymmetric encryption in message 104. In alternative embodiment SignOnKey could also be transmitted within a backend-backend connection to improve the man in the middle protection, but this only improves that protection.

But even in the case that an attacker, especially a man in the middle, would be able to obtain SignOnKey he has no possibility to access the data of the client 10 even if he has additionally direct access to the data base or the relating physical data carrier of data safe 31, since he does not have access to SignOnKey_2 to create the SignOnKey in its entirety. A direct attack through the interface is not possible, since he doesn't know the signature of the Sign-On service provider 20 and therefore he is not able to create the content message 104 himself

As mentioned above, the replay protection is present and this is irrespective of the way of transmission of the SignOnKey.

Further advantages are obtained since the data safe 31 is usable with the plurality of Sign-On service providers 20, which can be different banking organizations, health organizations or simply be used for indirect storage in data safe 30. It is therefore an aim not to improve an Sign-On for a great number of sites under one password but to securely store data in a data safe 31 of an external data storage provider 30. It is an advantage for the Sign-On service provider that he is able to store data in the data safe 30 directly for his clients for retrieval. These data can only be accessed through the Sign-On procedure as explained here.

### LIST OF REFERENCE SIGNS

| | | | |
|---|---|---|---|
| 10 | computer laptop | 104 | ticket preparation |
| 20 | Sign-On service provider | 105 | ticket transmittal |
| 30 | data storage provider | 106 | redirect request |
| 31 | data safe | 107 | verification step |
| 40 | net | 108 | ok or mTAN request |
| 101 | Sign-On request | 109 | data request or mTAN |
| 102 | challenge request | | transmittal |
| 103 | answer | | |

## Claims

1. A security system for storing sensitive data and providing access to this data to at least one user (10) having an electronic communication device and using a reduced sign-on procedure, comprising
a first computer system maintained by a first service provider (20) adapted to run at least one application and being accessible by the at least one user (10) following input of an user identification code within a request (101);
a second computer system maintained by a second service provider (30) adapted to run at least one application and being accessible by the at least one user (10) following input of an user identification code within a request;
wherein the application running on the first computer system is adapted to send a request (102) comprising the user identification code of user (10) as well as a challenge to authenticate the second computer towards the first computer to the second computer system; wherein the application of the second computer system is adapted to send an authentication message (103) comprising - besides a signature of the challenge - the user identification code and a token (SignOnKey_1) to the first computer system, wherein the token (SignOnKey_1) is asymmetrically encrypted with a first service provider's (20) public key, wherein upon the reception of the authentication message (103), the application of the first computer system is adapted to check the correctness of the challenge's signature and then to create an access ticket (104) comprising the first asymmetrically decrypted with first service provider's (20) private key, then digitally signed using first service provider's (20) private key SignOnKey_1, asymmetrically encrypted with a second service provider's (30) public key, wherein the content of said access ticket (104) is transmitted (105) to the user address from which the initial request (101) comprising the user identification code was initiated for a redirect (106) to an application of the second computer system, wherein the application within the second service provider (30) is adapted to start a communication session with said user for accessing data in the data storage facility (31) after having checked the authentication of the user based on the basis of the SignOnKey_1 and a second token (SignOnKey_2), which are by XORing them together used to compute the Sign-On key that allows for decrypting the data.

2. The system according to claim 1, wherein after the authentication check, the application of the second computer system requests an additional transmittal of a mobile TAN from the user (10).

3. The system according to claim 1 or 2, wherein the challenge request (102) comprises a challenge that is signed and returned to the same system in message (103).

4. The system according to claim 3, wherein the authentication message (103) further comprises a timestamp, a lifetime value, the challenge from request (102) and a digital signature of the timestamp, lifetime, the challenge and optional the user identification.

5. The system according to one of claims 3 or 4, wherein the access ticket (104) further comprises the encrypted signature (response) of a timestamp, a lifetime value, the challenge from request (102), the user identification.

6. The system according to any one of claims 1 to 5, wherein following reception of the initial request (101) the application of the first computer system is adapted to set up a SSL encrypted connection with the electronic communication device of the user.

7. The system according to any one of claims 1 to 6, wherein the first computer system as well as the second computer system comprise interfaces accessible for at least one application maintained by the first service provider (20) as well as for at least one application maintained by the second service provider (30) for an access by the user (10) over the net (40).

8. The system according to any one of claims 1 to 7, wherein the asymmetric encryption is an RSA encryption.

9. A method for storing sensitive data on a second computer system and providing access to this data to at least one user (10) having an electronic communication device and using a reduced sign-on procedure, comprising transmitting an initial request (101) by the user to a first computer system maintained by a first service provider (20) adapted to run at least one application, wherein the request (101) comprises an user identification code; wherein upon reception of the initial request (101) the first computer system is adapted to send a request (102) comprising the user identification code of user (10) as well as a challenge to authenticate the second computer towards the first computer to said second computer system adapted to run at least one application and being accessible by the at least one user (10) following input of an user identification code within a request; wherein an authentication message (103) comprising - besides a signature of the challenge - the user identification code and a token (SignOnKey_1) is sent from the second computer system to the first computer system, wherein the token (SignOnKey_1) is encrypted with a first service provider's (20) public key, wherein upon the reception of the authentication message (103), the first computer system checks the correctness of the challenge's signature and then creates an access ticket (104) comprising the digitally signed SignOnKey_1, asymmetrically encrypted with a second service provider's (30) public key, wherein the content of said access ticket (104) is transmitted (105) to the user address from which the initial request (101) comprising the user identification code was initiated for a redirect (106) to the second computer system, wherein said second computer system a communication session with said user is started for accessing data in the data storage facility (31) after having checked the authentication of the user based on the basis of the SignOnKey_1 and a second token (SignOnKey_2), which are by XORing them together used to compute the Sign-On key that allows for decrypting the data.

## Patentansprüche

1. Sicherheitssystem zum Speichern von sensitiven Daten und zum Bereitstellen eines Zugangs zu diesen Daten für mindestens einen Benutzer (10), der ein elektronisches Kommunikationsgerät hat und eine reduzierte Sign-On Prozedur einsetzt, umfassend:
- ein erstes Computersystem, welches von einem ersten Diensteanbieter (20) betrieben wird, geeignet, um mindestens eine Anwendung auf diesem laufen zu lassen, und welches für den mindestens einen Benutzer (10) nachfolgend zu der Eingabe eines Benutzeridentifikationscodes innerhalb einer Anfrage (101) zugänglich ist;
- ein zweites Computersystem, welches von einem zweiten Diensteanbieter (30) betrieben wird, geeignet, um mindestens eine Anwendung auf diesem laufen zu lassen, und welches für den mindestens einen Benutzer (10) nachfolgend zu der Eingabe eines Benutzeridentifikationscodes innerhalb einer Anfrage zugänglich ist;
- wobei die auf dem ersten Computersystem laufende Anwendung geeignet ist, um eine Anfrage (102), welche den Benutzeridentifikationscode des Nutzers (10) sowohl als auch einen Challenge umfasst, um den zweiten Computer in Bezug auf den ersten Computer zu dem zweiten Computersystem zu authentifizieren, wobei die Anwendung des zweiten Computersystems geeignet ist, um eine Authentifizierungsnachricht (103), umfassend - neben einer Signatur des Challenge - den Benutzeridentifikationscode und ein Token (SignOnKey_1), an das erste Computersystem zu senden, während der Token (SignOnKey_1) mit einem öffentlichen Schlüssel des ersten Diensteanbieters (20) asymmetrisch verschlüsselt ist, wobei auf den Empfang der Authentifizierungsnachricht (103) die Anwendung des ersten Computersystems geeignet ist, um die Richtigkeit der Signatur des Challenge zu prüfen und dann ein Zugangsticket (104) zu erzeugen, umfassend den ersten asymmetrisch entschlüsselten, mit dem ersten Diensteanbieter's (20) privaten Schlüssel, dann digital signiert unter Einsatz des ersten Diensteanbieter's (20) privaten Schlüssels SignOnKey_1, asymmetrisches Verschlüsseln mit einem des zweiten Diensteanbieter's (30) öffentlichen Schlüssel, wobei der Inhalt des besagten Zugangstickets (104) an die Benutzeradresse übermittelt wird (105), von der die ursprüngliche Anfrage (101) umfassend den Benutzeridentifikationscode abgesandt worden ist, eingesetzt für eine Umleitung (106) an eine Anwendung des zweiten Computersystems, wobei die Anwendung innerhalb des zweiten Diensteanbieters (30) geeignet ist, um eine Kommunikationssitzung mit dem besagten Benutzer zu beginnen, um auf Daten in der Datenspeichereinrichtung (31) zuzugreifen, nachdem die Authentifizierung des Benutzers basierend auf der Basis des SignOnKey_1 und einem zweiten Token (SignOnKey_2) überprüft worden ist, die über ein XORieren zusammen eingesetzt werden, um den Sign-On Schlüssel zu berechnen, der das Entschlüsseln der Daten gestattet.

2. System nach Anspruch 1, bei dem nach der Authentifizierungsprüfung die Anwendung des zweiten Computersystems eine zusätzliche Übermittlung einer mobilen TAN von dem Benutzer (10) anfordert.

3. System nach Anspruch 1 oder 2, bei dem die Challenge-Anfrage (102) einen Challenge umfasst, der unterschrieben und an dasselbe System in der Nachricht (103) zurückgeleitet wird.

4. System nach Anspruch 3, bei dem die Authentifizierungsnachricht (103) weiterhin einen Zeitstempel, einen Lifetime-Wert, die Challenge von der Anfrage (102) und eine digitale Signatur des Zeitstempels, der Lifetime, der Anfrage und optional der Benutzeridentifizierung umfasst.

5. System nach einem der Ansprüche 3 oder 4, bei dem das Zugangsticket (104) weiterhin die verschlüsselte Signatur (Antwort) eines Zeitstempels, eines Lifetime-Wertes, des Challenge von der Anfrage (102) oder die Benutzeridentifikation umfasst.

6. System nach irgendeinem der vorstehenden Ansprüche 1 bis 5, bei dem auf den Empfang der initialen Anfrage (101) die Anwendung des ersten Computersystems geeignet ist, um eine SSL-verschlüsselte Verbindung mit dem elektronischen Kommunikationsgerät des Benutzers aufzubauen.

7. System nach einem der vorstehenden Ansprüche 1 bis 6, bei dem das erste Computersystem sowohl als auch das zweite Computersystem Schnittstellen umfassen, die für mindestens eine Anwendung, die vom ersten Diensteanbieter (20) betrieben wird, sowohl als auch für mindestens eine Anwendung zugänglich sind, die von dem zweiten Diensteanbieter (30) betrieben wird, für einen Zugriff durch den Benutzer (10) für über das Netz (40).

8. System nach einem der vorstehenden Ansprüche 1 bis 7, bei dem die asymmetrische Verschlüsselung eine RSA-Verschlüsselung ist.

9. Verfahren zum Speichern von sensitiven Daten auf einem zweiten Computersystem und Bereitstellen des Zugangs zu diesen Daten für mindestens einen Benutzer (10) mit einem elektronischen Kommunikationsgerät und Einsetzen eines reduzierten Sign-On-Verfahrens, umfassend das Übertragen einer ursprünglichen Anfrage (101) durch den Benutzer an das erste Computersystem, welches von einem ersten Diensteanbieter (20) betrieben wird, geeignet, um mindestens eine Anwendung laufen zu lassen, wobei die Anfrage (101) einen Benutzeridentifikationscode umfasst;
- wobei bei Empfang der ursprünglichen Anfrage (101) das erste Computersystem geeignet ist, um eine Anfrage (102), welche den Benutzeridentifikationscode des Nutzers (10) sowohl als auch einen Challenge umfasst, um den zweiten Computer in Bezug auf den ersten Computer zu dem zweiten Computersystem zu authentifizieren, welches geeignet ist, mindestens eine Anwendung laufen zu lassen, und welches für den mindestens einen Benutzer (10) nachfolgend einer Eingabe eines Benutzeridentifikationscodes innerhalb einer Anfrage zugänglich ist; wobei eine Authentifizierungsnachricht (103), umfassend - neben einer Signatur des Challenge - den Benutzeridentifikationscode und ein Token (SignOnKey_1), von dem zweiten Computersystem an das erste Computersystem gesendet wird, während der Token (SignOnKey_1) mit einem öffentlichen Schlüssel des ersten Diensteanbieters (20) verschlüsselt ist, wobei auf den Empfang der Authentifizierungsnachricht (103) das erste Computersystem die Richtigkeit der Signatur des Challenge prüft und dann ein Zugangsticket (104) erzeugt, umfassend den digital signierten SignOnKey_1, der mit einem des zweiten Diensteanbieter's (30) öffentlichen Schlüssel asymmetrisch verschlüsselt ist, wobei der Inhalt des besagten Zugangstickets (104) an die Benutzeradresse übermittelt wird (105), von der die ursprüngliche Anfrage (101) umfassend den Benutzeridentifikationscode abgesandt worden ist, eingesetzt für eine Umleitung (106) an das zweite Computersystem, wobei innerhalb des zweiten Computersystems eine Kommunikationssitzung mit dem besagten Benutzer g Anwendung innerhalb des zweiten Diensteanbieters (30) geeignet ist, um eine Kommunikationssitzung mit dem besagten Benutzer zu beginnen, um auf Daten in der Datenspeichereinrichtung (31) zuzugreifen, nachdem die Authentifizierung des Benutzers basierend auf der Basis des SignOnKey_1 und einem zweiten Token (SignOnKey_2) überprüft worden ist, die über ein XORieren zusammen eingesetzt werden, um den Sign-On Schlüssel zu berechnen, der das Entschlüsseln der Daten gestattet.

## Revendications

1. Système de sécurité pour sauvegarder des données sensitives et pour donner accès à ces données à au moins un utilisateur (10) qui a un appareil de communication éléctronique et qui utilise une procédure d'ouverture de session réduite, comprenant
un premier système d'ordinateur maintenu par un premier fournisseur de services (20) adapté pour exécuter au moins une application et étant accessible pour au moins un utilisateur (10) suivant l'entrée d'un code d'identification d'utilisateur dans une requête (101);
un deuxième système d'ordinateur maintenu par un deuxième fournisseur de services (30) adapté pour exécuter au moins une application et étant accessible pour au moins un utilisateur (10) suivant l'entrée d'un code d'identification d'utilisateur dans une requête;
où l'application exécutée sur le premier système d'ordinateur est adaptée pour envoyer une requête (102) comprenant le code d'identification d'utilisateur de l'utilisateur (10) ainsi qu'un challenge pour établir l'authenticité du deuxième ordinateur envers le premier ordinateur pour le deuxième système d'ordinateur; où l'application du deuxième système d'ordinateur est adaptée pour envoyer un message d'authentification (103) comprenant - à part d'une signature du challenge - le code d'identification d'utilisateur et un jeton (SignOnKey_1) au premier système d'ordinateur, où le jeton (SignOnKey_1) est crypté de manière asymétrique avec une clé publique du premier fournisseur de services (20), où à la réception du message d'authentification (103), l'application du premier système d'ordinateur est adaptée pour vérifier l'exactitude de la signature du challenge et ensuite de créer un ticket d'accès (104) comprenant déchiffrer de manière asymétrique avec la première clé privée du premier fournisseur de services (20), ensuite signer numériquement en utilisant la clé privée du premier fournisseur de services (20) SignOnKey_1, crypté de manière asymétrique avec une clé publique du deuxième fournisseur de services (30), où le contenu dudit ticket d'accès (104) est transmis (105) à l'adresse de l'utilisateur duquel était initié la requête initiale (101) comprenant le code d'identification d'utilisateur pour une redirection (106) vers une application du deuxième système d'ordinateur, où l'application du deuxième fournisseur de services (30) est adaptée pour commencer une session de communication avec ledit utilisateur pour accéder à des données dans l'installation de stockage de données (31) après avoir vérifiée l'authentification de l'utilisateur basée en partant du SignOnKey_1 et d'un deuxième jeton (SignOnKey_2), qui sont utilisés ensemble dans une opération XOR pour calculer la clé Sign-On qui permet le déchiffrage des données.

2. Système de sécurité suivant la revendication 1, où après la vérification de l'authentification, l'application du deuxième système d'ordinateur demande une transmission supplémentaire d'une mobile TAN de l'utilisateur (10).

3. Système de sécurité suivant la revendication 1 ou 2, où la requête (102) de challenge comprend un challenge qui est signé et retourné dans le même système dans un message (103).

4. Système de sécurité suivant la revendication 3, où le message (103) d'authentification comprend aussi un horodatage, une valeur de durée de vie, le challenge de la requête (102) et une signature numérique de l'horodatage, de la durée de vie, le challenge et optionnellement une identification de l'utilisateur.

5. Système de sécurité selon l'une quelconque des revendications 3 ou 4, où le ticket d'accès (104) comprend aussi la signature (réponse) crypté de l'horodatage, une valeur de durée de vie, le challenge de la requête (102), l'identification de l'utilisateur.

6. Système de sécurité selon l'une quelconque des revendications 1 à 5, où suivant la réception de la requête (101) initiale l'application du premier système d'ordinateur est adaptée pour monter une connexion crypté en SSL avec l'appareil de communication éléctronique de l'utilisateur.

7. Système de sécurité selon l'une quelconque des revendications 1 à 6, où le premier système d'ordinateur ainsi que le deuxième système d'ordinateur comprennent des interfaces accessibles pour au moins une application maintenue par le premier fournisseur de services (20) ainsi que pour au moins une application maintenue par le deuxième fournisseur de services (30) pour un accès par l'utilisateur (10) par le net (40).

8. Système de sécurité selon l'une quelconque des revendications 1 à 7, où le cryptage asymétrique est un cryptage RSA.

9. Une méthode pour sauvegarder des données sensitives sur un deuxième système d'ordinateur et donner accès à ces données à au moins un utilisateur (10) qui a un appareil de communication éléctronique et qui utilise une procédure d'ouverture de session réduite, comprenant transmettre une requête (101) initiale par l'utilisateur à un premier système d'ordinateur maintenu par un premier fournisseur de services (20) adapté pour exécuter au moins une application, où la requête (101) comprend un code d'identification d'utilisateur; où, à la réception de la requête (101) initiale, le premier système d'ordinateur est adapté pour envoyer une requête (102) comprenant le code d'identification d'utilisateur de l'utilisateur (10) ainsi qu'un challenge pour établir l'authenticité du deuxième ordinateur envers le premier ordinateur pour ledit deuxième système d'ordinateur adapté pour exécuter au moins une application et étant accessible pour au moins un utilisateur (10) suivant l'entrée d'un code d'identification d'utilisateur dans une requête; où une message (103) d'authentification comprenant - à part une signature du challenge - le code d'identification d'utilisateur et un jeton (SignOnKey_1) sont envoyés du deuxième système d'ordinateur au premier système d'ordinateur, où le jeton (SignOnKey_1) est crypté avec une clé publique du premier fournisseur de services (20), où à la réception du message (103) d'authentification, le premier système d'ordinateur vérifie l'exactitude de la signature du challenge et ensuite crée un ticket d'accès (104) comprenant le SignOnKey_1 signé numériquement, crypté de manière asymétrique avec une clé publique du deuxième fournisseur de services (30), où le contenu dudit ticket d'accès (104) est transmis (105) à l'adresse de l'utilisateur à partir duquel était initiée la requête (101) initiale comprenant le code d'identification d'utilisateur pour une redirection (106) au deuxième système d'ordinateur, où une session de communication avec ledit utilisateur est commencée dans ledit deuxième système d'ordinateur pour accéder aux données dans l'installation de stockage de données (31) après avoir vérifié l'authentification de l'utilisateur basée en partant du SignOnKey_1 et d'un deuxième jeton (SignOnKey_2), qui sont utilisés ensemble dans une opération XOR pour calculer le Sign-On key qui permet de déchiffrer les données.
